# EUROPEAN PATENT SPECIFICATION

(11) **EP 4 074 402 B1**
(45) Date of publication and mention of the grant of the patent: **06.09.2023**
(21) Application number: 22159232.2
(22) Date of filing: 28.02.2022
(51) Int. Cl.: D04B 21/16, D06F 58/22, B01D 39/08

(54) **A DRYER HAVING IMPROVED FILTER**
TROCKNER, DER EINEN VERBESSERTEN FILTER AUFWEIST
SÉCHOIR DOTÉ D'UN FILTRE AMÉLIORÉ

(30) Priority: 12.04.2021 TR 202106454
(43) Date of publication of application: 19.10.2022
(73) Proprietor: Arçelik Anonim Sirketi, 34445 Istanbul (TR)
(72) Inventor: ACIR, Aysin, 34445 Istanbul (TR); ATILA, Meryem, 34445 Istanbul (TR); KARAGOZ, Selcuk, 34445 Istanbul (TR); DEVRIM, Gokberk, 34445 Istanbul (TR); BOYACI, Bekir, 34445 Istanbul (TR)

(56) References cited:
- WO-A1-2009/133023
- CN-B- 104 328 597
- US-A1- 2008 282 569
- US-A1- 2011 167 662
- US-B1- 9 828 705

## Description

The present invention relates to a dryer with preferably a heat pump having an improved filter.

The drying air leaving the fan in household dryers, especially the dryers with heat pumps, follows an air duct and passes over the laundry or textile and leaves the fluff and fibers therein by means of a filter. Different types of filter fabrics are used for said filtering process. Basically, they are divided into two as manufactured from woven and non-woven surface. In the case of woven fabric filters, users are requested by the manufacturer to clean the filter in front of the door at the end of each cycle, and the filter in front of the heat exchanger, typically every six months. The reason why the filter in front of the door is to be cleaned every cycle is that the filter manufactured from woven textile performs two-dimensional filtering, and the filter pores are clogged at the end of a single cycle, causing problems such as energy regime deterioration and failure to dry in other cycles. The reason why the front of the heat exchanger is cleaned every six months is that the fibers smaller than the pore size of the existing filter in front of the door passes through and accumulate in front of the heat exchanger.

On the other hand, in the case of non-woven fabrics, it is not necessary to clean the filter at the end of each cycle. Typically, at the end of seven cycles, the filter manufactured from non-woven surface in the form of a bag is expected to be removed and discarded by the user. However, the strength of non-woven surface fabrics is naturally low such that problems such as disintegration, tearing and damage can be encountered during the cycle. Even though the fluff and fiber retaining ability is high in filters manufactured from non-woven surface fabrics, a poor performance is obtained in filtering small particles and leakage is observed. Therefore, the heat exchanger area also gets dirty in this fabric type, and it is not considered suitable for long-term use. Due to such disadvantages in the state of the art, the user satisfaction decreases and the quality criteria cannot be met due to increasing service costs. Although there is a need for an easy-to-clean filter structure with high filtering performance and high strength in the dryers considering all these trade-offs, there is no such embodiment in the state of the art.

In the state of the art International Patent Document No. WO2020133299A1, a 3D fabric filter is disclosed, which is composed of various layers and which has improved water absorption and storage capabilities.

Documents US 2008/282569 A1,WO 2009/133023 A1 and US 2011/167662 A1, each discloses an air dryer comprising a filter in the air duct.

In the state of the art European Patent Document No. EP2334864B1, a dryer is disclosed, comprising a fabric filter having one property from the group of hydrophobic, dirt repellent and antibacterial fabric, and which is connected to a carrier.

The aim of the present invention is the realization of a dryer comprising an easy-to-clean fluff filter which has both high filtering and air-permeability performance, and high strength.

The dryer, preferably with a heat pump, realized in order to attain the aim of the present invention and explicated in the claims, comprises a body and an air duct which is disposed in the body so as to ensure the circulation of the air during the air cycle. Said air duct contains all the sub-components through which the process air passes such as front bearing housing, area in front of or behind the heat exchanger, the air flow duct, the drum inlet and outlet, and forms an air flow path to direct the air. The dryer comprises a filter disposed in the air duct perpendicularly to the air flow direction and having a breathable upper layer which is manufactured from fabric, a breathable lower layer which is manufactured from fabric and which is positioned parallel to and at a distance from the upper layer, and a spacer layer in the form of spacer yarns which is disposed between the lower layer and the upper layer and which ensures air passage. The fabrics forming the lower and upper layers can be manufactured by knitting or weaving. By means of said three-layered structure known as 3D (spacer) fabric, a high filtering performance is obtained with minimal air flow losses with respect to 2D fabrics during the cycle in the dryer, and high strength is ensured which provides a long economic life. Moreover, since the air flow loss is low, the energy consumption of the dryer accordingly decreases, providing energy efficiency.

In an embodiment of the present invention, the dryer comprises the filter having the upper layer which has a lower porosity than or equal porosity to the lower layer. When the upper layer is considered as the first surface encountered by the process air in the dryer while entering the filter, a more efficient filtering performance is provided with less air flow loss by means of the upper layer having a lower or equal porosity with respect to the lower layer.

In an embodiment of the present invention, the dryer comprises the filter having the spacer layer with spacer yarns arranged as crosswise (XX), parallel to each other (II) or as a crosswise-parallel mixture. Thus, the fibers collected in the spacer layer can be easily removed or cleaned. Preferably, depending on the location of the filter in the dryer, said structures may have parallel (II) spacer yarns where the fluff is heavily collected and crosswise (XX) spacer yarns where the fluff is lightly collected.

In an embodiment of the present invention, the dryer comprises the filter having the spacer layer with spacer yarns composed of monofilaments or multifilaments with a maximum diameter of 0.3 mm. The tests show that the filaments manufactured with a thickness beyond the above-mentioned value cause a decrease in performance in terms of flow rate and easy cleaning.

In an embodiment of the present invention, the dryer comprises the filter having the lower layer and/or upper layer composed of monofilament or fully-drawn-yarn (FDY) multifilaments. Thus, the adherence of the fluff and fibers accumulating on the surface decreases, which in turn increases the surface slipperiness, and user is provided with an easy-to-clean product.

In an embodiment of the present invention, the dryer comprises the filter having the lower layer and/or upper layer treated with chemical finishing. Thus, the surface slipperiness is further increased, and the user is provided with an easier-to-clean product.

In another embodiment of the present invention, the dryer comprises the filter having the spacer layer with spacer yarns manufactured from synthetic material. By means of the layer manufactured said material, the horizontal air-permeability and the impact resistance are improved.

In another embodiment of the present invention, the dryer comprises a filter which is disposed in front of or behind the heat exchanger in the air duct. Thus, any fiber leaking to the heat exchanger which is disposed in the dryer is prevented, and the filter cleaning frequency which is once every six months is extended by two-fold (once every twelve months).

A dryer realized in order to attain the aim of the present invention is illustrated in the attached figures, where:

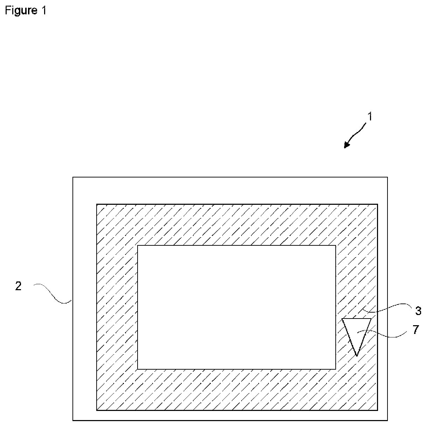

Figure 1 - is the representative schematic view of the dryer.

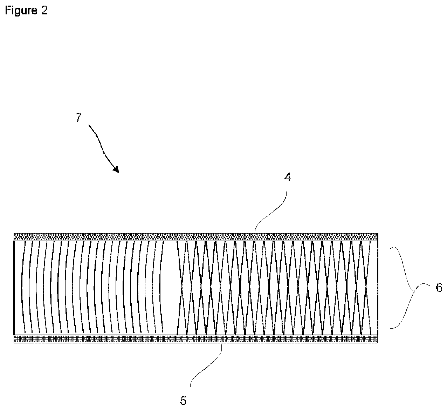

Figure 2 - is the schematic side view of the filter.

The elements illustrated in the figures are numbered as follows:
1. Dryer
2. Body
3. Air duct
4. Upper layer
5. Lower layer
6. Spacer layer
7. Filter

The dryer (1), preferably with a heat pump, comprises a body (2) and an air duct (3) which is disposed in the body (2) and which provides the air circulation during the air cycle. Said air duct (3) contains all the sub-components through which the process air passes such as front bearing housing, area in the front or at the rear of the heat exchanger, the air flow duct, the drum inlet and outlet, and forms an air flow path to direct the air. The dryer (1) comprises a filter (7) disposed in the air duct (3) perpendicularly to the air flow direction and having a breathable upper layer (4) which is manufactured from fabric, a breathable lower layer (5) which is manufactured from fabric and which is positioned parallel to and at a distance from the upper layer (4), and a spacer layer (6) in the form of spacer yarns which is disposed between the lower layer (5) and the upper layer (4) and which ensures air passage. The fabrics forming the lower layer (5) and the upper layer (4) can be manufactured by knitting or weaving. In all dryer types (vented, condenser, heat pump, hybrid), said filter (7) can be placed at various regions (front bearing housing, area in front of or behind the heat exchanger, air flow duct, drum inlet and outlet) of the dryer in order to retain the fluff and fibers breaking off from the laundry. Said three-layered structure known as 3D (spacer) fabric can be manufactured from warp- or weft-knitted fabric arranged at intervals and parallel to each other, and the yarns used can be antibacterial. Basically, the humid air together with the fluff and fibers therein circulating during the cycle of the dryer (1) encounters first the upper layer (4) of said filter (7). Especially by means of the spacer yarns which are heavily arranged at the spacer layer (6), a high filtering performance is obtained, and the humid process air is filtered last by the lower layer (5) and then continues its circulation. The need for cleaning the filter (7) after each use is eliminated, and it is sufficient to clean only the filter (7) positioned in front of the heat exchanger once every twelve months at the earliest manually or with water, brush, wet wipe or vacuum cleaner. Thus, a high filtering performance is obtained with minimal air flow losses during the cycle in the dryer (1), and high strength is ensured which provides a long economic life. Moreover, since the air flow loss is low by means of the channeled, gapped and porous structure of the filter (7), the energy consumption caused by the dryer (1) air cycle is accordingly decreased, providing energy efficiency.

In an embodiment of the present invention, the dryer (1) comprises the filter (7) having the upper layer (4) which has a lower porosity than or equal porosity to the lower layer (5). In other words, the surface the air carrying the fluff enters must be knitted or woven with denser or equal intervals with respect to the surface the air exits. Thus, the air flow therein is regulated according to the optimal performance. When the upper layer (4) is considered as the first surface encountered by the process air in the dryer (1) while entering the filter (7), a more efficient filtering performance is provided by means of the upper layer (4) having a lower or equal porosity with respect to the lower layer (5).

In an embodiment of the present invention, the dryer (1) comprises the filter (7) having the spacer layer (6) with spacer yarns arranged as crosswise (XX), parallel to each other (II) or as a crosswise-parallel mixture. Thus, the fibers collected in the spacer layer (6) can be easily removed or cleaned. Depending on the need, the crosswise or parallel arrangement of yarns in the filter (7) may change with various combinations. Especially, in the parallel type arrangement, the air flow losses are minimized thanks to the 3D fabric structure. Depending on the desired technical effect, the filaments can be placed parallel or obliquely to the air flow direction. Preferably, depending on the location of the filter in the dryer, said structures may have parallel (II) spacer yarns where the fluff is heavily collected and crosswise (XX) spacer yarns where the fluff is lightly collected.

In an embodiment of the present invention, the dryer (1) comprises the filter (7) having the spacer layer (6) with spacer yarns composed of monofilaments or multifilaments with a maximum diameter of 0.3 mm. While monofilament yarns are manufactured from a single filament of certain thickness, multifilament yarns are formed by twisting many yarns together. Monofilament yarns have low cost and flexibility while multifilament yarns are structures with relatively higher strength compared to textured or monofilament yarns. The tests show that the filaments manufactured with a thickness beyond the above-mentioned value adversely affect the air flow in the spacer layer (6) and cause a decrease in performance in terms of easy cleaning.

In an embodiment of the present invention, the dryer (1) comprises the filter (7) having the lower layer (5) and/or upper layer (4) composed of monofilament or fully-drawn-yarn (FDY) multifilaments. Fully drawn yarns, which are formed with a special production technique for the production of multifilament yarns, are mostly obtained by drawing synthetic fibers at high winding speeds in industry. The resistance of fully drawn yarns to physical processes such as elongation and shrinkage is low. On the other hand, the fully drawn yarns (FDY), which can be used in both layers, are less bulky and less porous than textured yarns, another multifilament type. Thanks to these features, the necessary compactness between the filaments is provided and fiber passage is prevented. Moreover, the adherence of the fluff and fibers accumulating on the filter (7) surface decreases, which in turn increases the surface slipperiness, and user is provided with an easy-to-clean product. On the other hand, with the use of monofilament yarn in the lower (5) and/or upper layer (4), a structure with less volume, higher air permeability, lower filtering performance, relatively high rigidity and a rough surface is obtained. Similar to fully drawn multifilaments, it is less bulky and has higher air permeability than textured yarns. Thus, air flow loss is very low compared to other multifilament yarns. In terms of filtering performance and surface slipperiness, it has a lower performance than fully drawn multifilament yarns.

In an embodiment of the present invention, the dryer (1) comprises the filter (7) having the lower layer (5) and/or upper layer (4) treated with chemical finishing. Finishing typically covers all the mechanical and chemical processes that the textile material undergoes after pretreatment and coloring processes. Chemical finishing processes, which have many types such as softness, slipperiness, hard gripping, fullness, brightness, dirt repellent, water repellent, flame retardant, are used depending on the structure of the materials. After the chemical finishing is dissolved in a liquid, it is transferred to the material in a finishing machine working with the impregnation or extraction method. Thus, the surface slipperiness is further increased, and the user is provided with an easier-to-clean product. It is also possible to use antibacterial chemical finishing or yarn in order to prevent the fluff and fibers remaining in the filter (7) from generating odor and bacteria.

In another embodiment of the present invention, the dryer (1) comprises the filter (7) having the spacer layer (6) with spacer yarns manufactured from synthetic material. Spacer yarns manufactured from raw materials such as polyester, polypropylene, polyamide and PE increase the physical resistance against water and air interaction. Synthetic material can also be manufactured from recycled polyester, PLA, PE materials for sustainability. In both cases, the material strength required in the filter (7) is provided.

In another embodiment of the present invention, the dryer (1) comprises a filter (7) which is disposed in front of or behind the heat exchanger in the air duct (3). Thus, any fiber leak to the heat exchanger which is disposed in the dryer (1) is prevented, and the filter cleaning frequency which is once every six months is extended by two-fold (once every twelve months).

There are test results which meet the international standards that may be valid in all the embodiments of the present invention and provide the optimum working values of the present invention. For the lower layer (5) and the upper layer (4), the surface porosity is adjusted such that the air permeability is <7000 mm/s at a test area of 20 *cm*² and under 100 Pa pressure. It has a strength value greater than 3 kPa in order to prevent the fabrics from being crushed during cleaning and use, to preserve their form and to ensure a longer economic life. As a visual addition, the filter (7) can be manufactured from colored yarns or dyed with high-fastness dyes such that the lower layer (5) and the upper layer (4) can be distinguished more easily by the user and the quality perception is increased.

By means of the specially-configured 3D fabric structure of the present invention, a dryer (1) is realized, comprising a filter (7) which can be used in all types of dryers (vented, condenser, heat pump, hybrid), which can be placed into the dryer (1) in order to retain the fluff breaking off from the laundry (any place such as front bearing housing, area in front of or behind the heat exchanger, the drum inlet and outlet) and which has an improved filtering and cleaning performance.

## Claims

1. A dryer (1) **comprising** a body (2) and an air duct (3) which is disposed in the body (2) and which provides the air circulation during the air cycle, **characterized by** a filter (7) disposed in the air duct (3) perpendicularly to the air flow direction and having a breathable upper layer (4) which is manufactured from fabric, a breathable lower layer (5) which is manufactured from fabric and which is positioned parallel to and at a distance from the upper layer (4), and a spacer layer (6) in the form of spacer yarns which is disposed between the lower layer (5) and the upper layer (4) and which ensures air passage.

2. A dryer (1) as in Claim 1, **characterized by** the filter (7) having the upper layer (4) which has a lower porosity than or equal porosity to the lower layer (5).

3. A dryer (1) as in Claim 1 or 2, **characterized by** the filter (7) having the spacer layer (6) with spacer yarns arranged as crosswise (XX), parallel to each other (II) or as a crosswise-parallel mixture.

4. A dryer (1) as in any one of the above claims, **characterized by** the filter (7) having the spacer layer (6) with spacer yarns composed of monofilaments or multifilaments with a maximum diameter of 0.3 mm.

5. A dryer (1) as in any one of the above claims, **characterized by** the filter (7) having the lower layer (5) and/or upper layer (4) composed of monofilament or fully-drawn-yarn multifilaments yarns.

6. A dryer (1) as in any one of the above claims, **characterized by** the filter (7) having the lower layer (5) and/or upper layer (4) treated with chemical finishing.

7. A dryer (1) as in any one of the above claims, **characterized by** the filter (7) having the spacer layer (6) with spacer yarns manufactured from synthetic material.

8. A dryer (1) as in any one of the above claims, **characterized by** a filter (7) which is disposed in front of or behind the heat exchanger in the air duct (3).

## Patentansprüche

1. Ein Trockner (1) **bestehend** aus einem Gehäuse (2) und einem im Gehäuse (2) angeordneten Luftkanal (3), der für die Luftzirkulation während des Luftkreislaufs sorgt, ist **gekennzeichnet durch** einen im Luftkanal (3) senkrecht zur Luftströmungsrichtung angeordneten Filter (7) mit einer atmungsaktiven Oberschicht (4) aus Stoff, einer atmungsaktiven Unterschicht (5) aus Stoff, die parallel und im Abstand zur Oberschicht (4) angeordnet ist, und einer Abstandsschicht (6) in Form von Abstandsgarnen die zwischen der unteren Schicht (5) und der oberen Schicht (4) angeordnet ist und den Luftdurchtritt gewährleistet.

2. Ein Trockner (1) nach Anspruch 1 ist **dadurch gekennzeichnet, dass** der Filter (7) eine obere Schicht (4) aufweist, die eine geringere oder eine gleiche Porosität als die untere Schicht (5) aufweist.

3. Ein Trockner (1) nach Anspruch 1 oder 2 ist **dadurch gekennzeichnet, dass** der Filter (7) die Abstandsschicht (6) mit Abstandsgarnen aufweist, die kreuzweise (XX), parallel zueinander (II) oder als kreuzparallele Mischung angeordnet sind.

4. Ein Trockner (1) nach einem der oben genannten Ansprüche ist **dadurch gekennzeichnet, dass** der Filter (7) die Abstandsschicht (6) mit Abstandsgarnen aus Monofilamenten oder Multifilamenten mit einem maximalen Durchmesser von 0,3 mm aufweist.

5. Ein Trockner (1) nach einem der oben genannten Ansprüche ist **dadurch gekennzeichnet, dass** die untere Schicht (5) und/oder die obere Schicht (4) des Filters (7) aus Monofilamentgarnen oder vollverstreckten Multifilamentgarnen besteht.

6. Ein Trockner (1) nach einem der oben genannten Ansprüche ist **dadurch gekennzeichnet, dass** die untere Schicht (5) und/oder die obere Schicht (4) des Filters (7) mit einer chemischen Endbehandlung behandelt sind.

7. Ein Trockner (1) nach einem der oben genannten Ansprüche ist **dadurch gekennzeichnet, dass** der Filter (7) die Abstandsschicht (6) mit Abstandsgarnen aus synthetischem Material aufweist.

8. Trockner (1) nach einem der oben genannten Ansprüche ist **gekennzeichnet durch** einen Filter (7), der vor oder hinter dem Wärmetauscher im Luftkanal (3) angeordnet ist.

## Revendications

1. Un séchoir (1) **comprenant** un corps (2) et un conduit d'air (3) disposé dans le corps (2) et assurant la circulation de l'air pendant le cycle d'air, **caractérisé par** un filtre (7) disposé dans le conduit d'air (3) perpendiculairement à la direction du flux d'air et comportant une couche supérieure respirante (4) fabriquée à partir de tissu, une couche inférieure respirante (5) fabriquée en tissu et placée parallèlement à la couche supérieure (4) et à distance de celle-ci, et une couche d'espacement (6) sous forme de fils d'espacement disposée entre la couche inférieure (5) et la couche supérieure (4) et assurant le passage de l'air.

2. Un séchoir (1) selon la déclaration 1, **caractérisé par le fait que** le filtre (7) a la couche supérieure (4) qui a une porosité inférieure ou égale à la couche inférieure (5).

3. Un séchoir (1) selon la déclaration 1 ou 2, **caractérisé par le fait que** le filtre (7) a la couche d'espacement (6) avec des fils d'espacement disposés transversalement (XX), parallèlement les uns aux autres (II) ou comme un mélange transversal-parallèle.

4. Un séchoir (1) selon l'une quelconque des déclarations précédentes, **caractérisé par** le filtre (7) dont la couche d'espacement (6) comporte des fils d'espacement composés de monofilaments ou de multifilaments d'un diamètre maximal de 0,3 mm.

5. Un séchoir (1) selon l'une quelconque des déclarations précédentes, **caractérisé par le fait que** le filtre (7) a la couche inférieure (5) et/ou la couche supérieure (4) composées de fils monofilaments ou multifilaments entièrement étirés.

6. Un séchoir (1) selon l'une quelconque des déclarations précédentes, **caractérisé par le fait que** le filtre (7) a la couche inférieure (5) et/ou la couche supérieure (4) traitées avec une finition chimique.

7. Un séchoir (1) selon l'une quelconque des déclarations précédentes, **caractérisé par le fait que** le filtre (7) comporte la couche d'espacement (6) avec des fils d'espacement fabriqués en matière synthétique.

8. Un séchoir (1) selon l'une quelconque des déclarations précédentes, **caractérisé par** un filtre (7) disposé devant ou derrière l'échangeur de chaleur dans le conduit d'air (3).
